# EUROPEAN PATENT APPLICATION

(11) **EP 2 218 592 A1**
(43) Date of publication of application: **18.08.2010**
(21) Application number: 09172102.7
(22) Date of filing: 02.10.2009
(51) Int. Cl.: B60D 1/26

(54) **Hitching device for industrial, agricultural and similar towing vehicles**

(30) Priority: 13.02.2009 ES 200900263 U
(71) Applicant: Martinez Vidal, Roberto, 50720 Cartuja Baja (ES)
(72) Inventor: Martinez Vidal, Roberto, 50720 Cartuja Baja (ES)
(74) Representative: PROPI, S.L.

(57) **Abstract**

The present invention consists of a hitching device for industrial, agricultural and similar towing vehicles. Its special feature lies in the possibility of connecting and disconnecting the trailer or wagon without the driver needing to get out of the towing vehicle. It comprises a coupling piece (3) which articulately joins to a support (2) arranged at the rear of the towing vehicle. This support (2), due to the force which it bears, is preferably reinforced with a plate (1), placed between the towing vehicle and the support (2). In order to achieve a safe driving of the vehicle, preventing possible accidental breakaways of the towed trailer or wagon, a safety latch (4) has been designed, so that it joins to the coupling piece (3) connecting said coupling piece (3) to the joining means (7) and these in turn to the lever (6).

The lever (6) rests on a support (5) through fastening devices (8) which permit its movement, said support being fastened on the surface of the towing vehicle.

## Description

Hitching device for industrial, agricultural and similar towing vehicles.

### OBJECT OF THE INVENTION

The object of the present invention is a hitching device for industrial, agricultural and similar towing vehicles, so that operating a lever at the rear of the vehicle allows these hitching and releasing operations to be carried out without requiring the driver to get out of the vehicle.

### BACKGROUND OF THE INVENTION

Generally, towing hooks for towing vehicles, agricultural machinery, industrial tractor vehicles and such like have a towing hook at their rear, consisting of a manual guide pin, so that in order to hitch or release the trailer, the driver has to get out of the vehicle and lift the guide pin manually.

This entails that each time the driver wishes to release the trailer he has to get out of the vehicle, and this is the same for when he wishes to hitch it, spending a great deal of time on said operation which would not be necessary if the driver did not have to move from his position.

Patent ES 2271917 discloses a device for coupling an agricultural implement to an agricultural tractor. It comprises a hook main body which includes a hitching portion to house a coupling sphere arranged on the front end of the agricultural implement, and a cavity arranged next to the side of the hitching portion, a stopper housed in the cavity and intended to slide along the opening in the hitching portion of the cavity towards the hitching portion, in order to block the coupling sphere, a control lever intended to slide along an opening of the upper end of the cavity and which causes the stopper to slide between a release position of the coupling sphere and a locking position of the coupling sphere, and a spring to drive the stopper and the control lever downwards in the cavity. Thus, said device has a hooking pin arranged on an upper portion of the cavity of the hook main body, and a guide pin is arranged in the middle of the cavity.

As we have mentioned, this type of devices have to be actuated in a way in which the driver has to get out of the vehicle to hitch it or release it.

### DESCRIPTION OF THE INVENTION

The invention consists of a hitching device for industrial, agricultural and similar towing vehicles, so that it is not necessary to get out of the vehicle to carry out the hitching and releasing operations of the trailer. It comprises a coupling piece which is what directly joins to the towed trailer or wagon, connected to the towing vehicle through a support which can be reinforced with a plate. This coupling piece is joined to joining means, generally a metal chain or a towrope, joined at the opposite end to a lever which actuates the movement of the coupling piece.

The lever is positioned on a support through coupling means which permit the movement of said lever, and where said support is fastened on the surface of the lorry.

The coupling piece has a latch, wherethrough the chain or towrope is hooked, and which furthermore serves as a safety catch to prevent the accidental disconnection of the trailer or wagon while the vehicle is running.

### DESCRIPTION OF THE DRAWINGS

In order to complete the description being carried out and with the purpose of helping towards a better understanding of the characteristics of the invention, in accordance with a preferred example of embodiment thereof, a set of drawings is attached as an integral part of said description, wherein the following, in an illustrative and non-limitative character, has been represented:

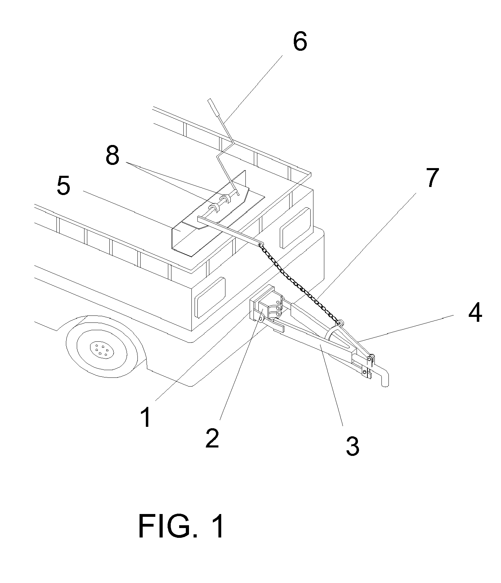

Figure 1 shows a perspective view of a possible preferred embodiment of the device of the invention, wherein the arrangement of all the elements with respect to the towing vehicle is observed;

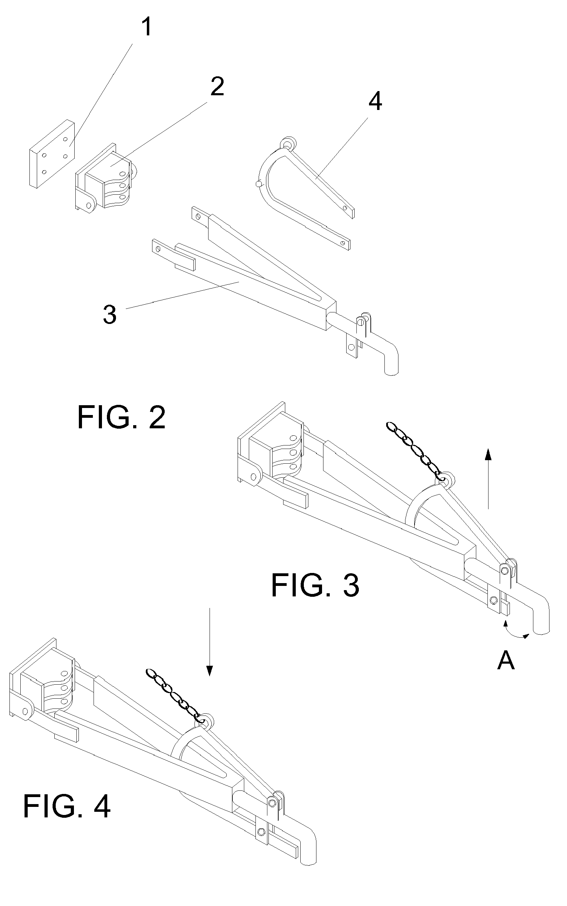

Figure 2 shows the exploded view of the lower part of the device;
Figure 3 shows a view of the lower part of the device of the invention, wherein the position of the latch is observed when the chain is pulled to hitch or release the trailer, creating a space A.
Figure 4 shows a view of the lower part of the device of the invention, wherein the position of the latch is observed once the trailer has been hitched, preventing the accidental release of the towed trailer.

### PREFERRED EMBODIMENT OF THE INVENTION

The present invention consists of a hitching device for industrial, agricultural and similar towing vehicles. Its special feature lies in the possibility of connecting and disconnecting the trailer or wagon without the driver needing to get out of the towing vehicle.

It comprises a coupling piece (3) which articulately joins to a support (2) arranged at the rear of the towing vehicle. This support (2), due to the force which it bears, is preferably reinforced with a plate (1), placed between the towing vehicle and the support (2).

The coupling piece (3) is connected to a lever (6) through joining means (7), which permit the connection or disconnection of said coupling piece (3) from the towed trailer or wagon, by means of the movement of the lever (6). These joining means (7) depend on the type of towing vehicle. If the length of said towing vehicle is such that it permits the driver to access the lever arranged at the rear without having to get out of the vehicle, a chain will be placed, which directly hooks to the lever (6) on one side, and to the coupling piece (3) on the other. If, on the contrary, the length of the towing vehicle does not permit the driver to reach the lever, a variant of the system can be created, so that the joining means (7) consists of a towrope which passes through a pulley which is positioned at the rear of the vehicle, preventing said towrope from holding up the sliding thereof on any part of the vehicle, and thereby achieving the length of the joining means (7) to be lengthened so as to position the lever as close as possible to the driver.

In order to achieve a safe driving of the vehicle, preventing possible accidental breakaways of the towed trailer or wagon, a safety latch (4) has been designed, so that it joins to the coupling piece (3) connecting said coupling piece (3) to the joining means (7) and these in turn to the lever (6). The lower part of the latch (4) makes contact with the end part of the coupling piece (3) while the vehicle is running, preventing an accidental release.

The lever (6) rests on a support (5) through fastening devices (8) which permit its movement, said support being fastened on the surface of the towing vehicle.

## Claims

1. Hitching device for industrial, agricultural and similar towing vehicles, **characterised in that** it comprises a coupling piece (3) which articulately joins to a support (2) arranged at the rear of the towing vehicle, so that the coupling piece (3) is connected to a lever (6) through joining means (7), which permit the connection or disconnection of said coupling piece (3) from the towed trailer by means of the movement of the lever (6).

2. Hitching device for industrial, agricultural and similar towing vehicles, according to claim 1, **characterised in that** it has a latch (4) in order to connect the coupling piece (3) to the joining means (7), latch (4) which acts as a safety catch during the running of the vehicle to prevent the trailer from accidentally breaking away, the lower part of said latch (4) being in contact with the end part of the coupling piece (3).

3. Hitching device for industrial, agricultural and similar towing vehicles, according to previous claims, **characterised in that** the support (2) is reinforced through a plate (1).

4. Hitching device for industrial, agricultural and similar towing vehicles, according to previous claims, **characterised in that** the lever (6) rests on a support (5), fastened on the surface of the lorry, through fastening devices (8) which permit its movement.

5. Hitching device for industrial, agricultural and similar towing vehicles, according to previous claims, **characterised in that** the joining means (7) which connect the lever (6) to the coupling piece (3) is a metal chain.

6. Hitching device for industrial, agricultural and similar towing vehicles, according to claims 1 to 4, **characterised in that** the joining means (7) which connect the lever (6) to the coupling piece consists of a towrope, which passes through a pulley, permitting the positioning of the lever (6) as close as possible to the driver in vehicles with a long rear.
